# EUROPEAN PATENT APPLICATION

(11) **EP 4 541 182 A1**
(43) Date of publication of application: **23.04.2025**
(21) Application number: 24207375.7
(22) Date of filing: 18.10.2024
(51) Int. Cl.: A01K 11/00, A01K 29/00

(54) **ANIMAL HUSBANDRY SYSTEM**

(30) Priority: 20.10.2023 NL 2036089
(71) Applicant: Lely Patent N.V., 3147 PB Maassluis (NL)
(72) Inventor: VAN ADRICHEM, Paulus Jacobus Maria, 3147 PB Maassluis (NL); BLOKLAND, Korstiaan Cornelis, 3147 PB Maassluis (NL); VAN HOUTUM, Paul Guy, 3147 PB Maassluis (NL); MEEUWESEN, Adrianus Cornelis Maria, 3147 PB Maassluis (NL); NIJHOF, Wikke, 3147 PB Maassluis (NL)
(74) Representative: Octrooibureau Van der Lely N.V.

(57) **Abstract**

Animal husbandry system, wherein a group of animals can move about freely in an area, the system comprising detection and tracking means for repeatedly detecting and tracking the position of individual animals and for assigning to the animals a track comprising tracking identity data and tracking position data from a first detection until a tracking error occurs. The system comprises animal identification means with individual animal identity data. Linking means are provided for repeatedly linking the tracking identity data of individual animals to the individual animal identity data at a linking moment at a linking location with the identification means. The system is configured for automatically gathering and analyzing animal behaviour data, taking into account for each animal only animal behaviour data which are gathered in a defined time interval comprising a linking moment for that animal, thus improving the reliability.

## Description

The present invention relates to an animal husbandry system, wherein a group of animals can move about freely in an area intended therefor, the system comprising detection and tracking means configured for repeatedly detecting and then temporarily tracking the position of individual animals until a tracking error occurs and in doing so assigning to the individual animals a track comprising tracking identity data and tracking position data from a moment of first detection until the tracking error occurs.

Such systems are known in the art. Monitoring the animals in the system and gathering relevant animal data plays an important role in modern animal husbandry systems. Being able to correctly identify animals within the group is of paramount importance.

WO2022/260576 discloses a positioning system in which mobile units transmit radio messages containing identity information via ultra-wideband (UWB) to a number of fixed base stations which determine the position of each mobile unit. Traces of the mobile units are registered. If a sufficiently large number of traces is being interrupted in a certain area in a certain time interval, the base station configuration is adapted.

WO2018/174812 describes a video monitoring system for identifying an individual animal in a group of animals each carrying an identification tag. An event of interest related to the individual animal is detected, after which the animal in question is tracked and its identity is determined by means of the identification tag as soon as it visits an identification station. Multiple animals may be tracked at the same time, when multiple events of interest have been detected. Not all individual animals are constantly tracked.

EP3335551 deals with a method of monitoring livestock inside of a building using a camera arranged above the livestock for gathering tracking data relating to a motion of a tracked individual animal. The motion data thus obtained can be compared to stored motion data or motion patterns related to or associated with a special state or condition of an animal.

There is a need for an improved and economical, yet simple animal husbandry system.

It is an object of the present invention to provide such an improved system.

The invention achieves the object at least in part by means of a system according to claim 1, in particular an animal husbandry system, wherein a group of animals can move about freely in an area intended therefor, the system comprising detection and tracking means configured for repeatedly detecting and then temporarily tracking the position of individual animals until a tracking error occurs and in doing so assigning to the individual animals a track comprising tracking identity data and tracking position data from a moment of first detection until the tracking error occurs, wherein the system further comprises animal identification means with individual animal identity data, wherein linking means are provided configured for repeatedly linking the tracking identity data of individual animals to the individual animal identity data at a linking moment at a linking location by means of the identification means, the system being configured for automatically gathering and analyzing animal behaviour data, wherein the system is configured to therefor take into account for each animal only animal behaviour data which are gathered in a defined time interval comprising a linking moment for that animal.

In this way, only animal behaviour data are used for which there is a high probability that the animal tracking identity effectively corresponds to the animal identity. This improves the accuracy of the system.

Thus, a user-friendly, animal-friendly, safe and reliable animal husbandry system is realized.

The invention is based on the insight that the reliability of the data gathering can be improved by ensuring that only data are taken into account for which the animal's identity is practically beyond doubt. The linking means provide a periodical ascertainment of the correct animal identity for the animal tracking means. This can be achieved in a both user-friendly and animal-friendly automated way.

Suitable and advantageous embodiments are described in the dependent claims, as well as in the description below.

According to a first embodiment of the invention, the defined time interval is a predetermined, fixed time interval. This constitutes an implementation which is easy to implement, yet satisfactory.

According to a further embodiment, the defined time interval is dependent on the animal's race and/or age and/or parity and/or oestrus and/or historical behaviour. Based on trial and error, or on historical data, the time interval can readily be optimised with respect to the animal's race, age, parity and/or oestrus. For example, older animals tend to be less mobile and move slower than younger ones or animals in heat, so that less often track errors occur and the interval can be made longer. Also, based on historical behaviour of the animal, the time interval can be optimised.

In a further embodiment, the defined time interval is dependent on the time of day and/or on the season and/or on the weather. In this way, a further optimization can be achieved. For example, during the day, or on a cool day in spring, or during a thunderstorm, there will be more movements and accordingly more track errors, so that the time interval should be kept shorter. During the night or on a hot summer day there will be less movements and accordingly less track errors, so that longer time intervals can be used. Appropriate intervals in different occurring cases can be readily found and implemented.

In a highly advantageous embodiment, the defined time interval substantially starts at the last moment of first detection of the animal in question by the detection and tracking means before the linking moment and ends at the first tracking error for the animal in question after the linking moment, so that the defined time interval substantially corresponds to one complete track of the animal in question. In this way, optimal use is being made of the probably reliable track data. This has proven to give excellent results in practice.

In a further embodiment, only a subset of the animal behaviour data gathered in the defined time interval substantially corresponding to the complete track are taken into account. Although in principle all the data from the complete track are reliable, it may be advantageous to use only a subset thereof, for example for computational efficiency reasons.

In yet another embodiment, the detection and tracking means comprise at least one camera, a processor or a computer processing unit, and image analysis means. This constitutes a very animal-friendly implementation, as the animals are not disturbed in any way. As it is automated, it is also a very user-friendly implementation.

In an alternative embodiment, the detection and tracking means comprise tags wearable by the animals configured for repeatedly transmitting messages containing identity information of the animal in question to a number of base stations, which are configured for determining the animal's position therefrom. Preferably, the messages are radio messages transmitted using ultra-wideband (UWB). This embodiment also gives good results.

Advantageously, the identification means comprise a tag wearable by each animal and at least one tag reader. This is a very simple and relatively cheap, yet effective implementation.

Alternatively, the identification means comprise a camera with image analysis means. The animals can be recognized at a suitable location from their size, body shape, skin pattern, etcetera, in a manner known as such.

According to a further embodiment, the animal behaviour data comprise animal position data. Such data are highly useful for many analysis purposes.

Advantageously, the animal behaviour data are used for heat detection. Thus, animals in heat can be reliably identified and properly dealt with. For example, they can be separated for artificial insemination.

In a further embodiment, the linking location is situated inside, at or near a milking robot, a feeding/drinking station, a selection gate and/or a detection gate. These are suitable locations for the linking action, because there the animal in question stands still for a while.

Preferably, the linking moment is chosen just before or during or after the milking of the animal in a milking robot. This is a suitable moment for the automated linking action.

The invention will now be further explained with reference to the following Figure, which schematically illustrates the system according to the invention.

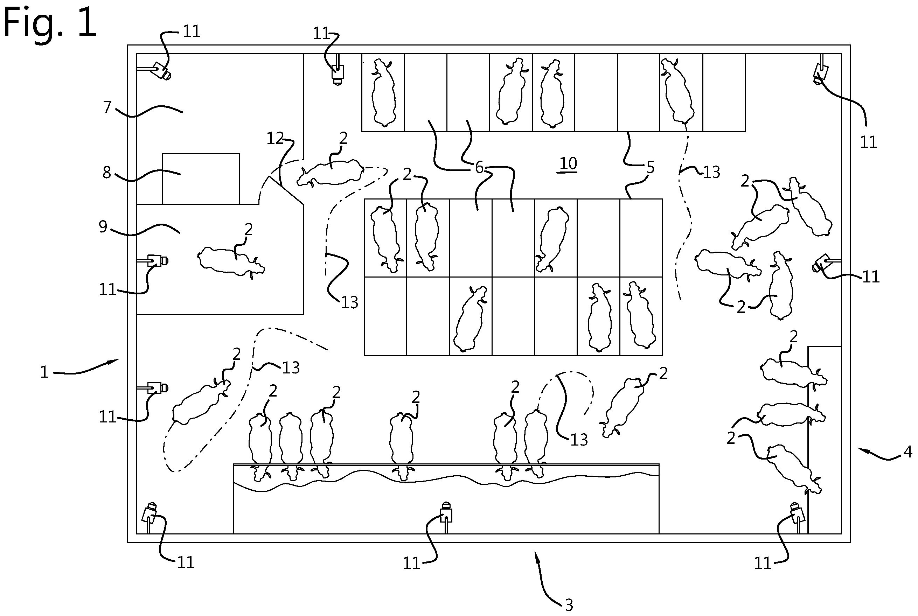

Figure 1 shows an area with an animal husbandry system according to the invention.

In Figure 1 an animal husbandry system with an area here in the form of a stable or shed or barn 1 wherein a group of animals 2 can move about freely is shown. In the example shown the animals are cows. Of course, the invention can also be applied to an animal husbandry system involving other animals, such as goats, pigs, horses, or even chickens, turkeys, etcetera. The stable 1 can also be a structure with, for example, a partly open roof. The system according to the invention can be applied in a free stall barn or in an open area like a meadow or pasture with cattle fences. It can also be applied in a combination of a stall and a pasture.

In the example shown, the stable 1 has a number of activity areas for the animals 2: a feeding area 3, a drinking area 4, at least one resting area 5 with cubicles 6, a milking area 7 with a milking robot 8, and a treatment area 9. All these areas are interconnected by one or more alleys 10.

Monitoring and analyzing means configured for determining and tracking the identity and the position of each individual animal 2 are provided, in the embodiment shown in the form of a number of cameras 11 and a processor with appropriate software, as will be elucidated below.

The cameras 11 are arranged for monitoring a region or a subarea or a number of subareas of the stable 1. Of course, other (optical) sensors can in principle be used instead of the cameras 11, or additionally. The cameras 11 are provided in such a way that, collectively, they are configured for monitoring substantially the complete shed 1, particularly all the animals 2. The cameras 11 can be provided in the shed 1 above the animals 2 (e.g. centrally, theoretically only one camera can be used), or as shown in Figure 1, on the walls of the shed 1.

The cameras 11 can be fixedly positioned and oriented in such a way that all relevant subareas of the area 1 can be monitored. Alternatively, they may be mounted in a pivotable way. The subareas may overlap. In case the invention is used in a pasture, the cameras 11 may be provided on fences, at a sufficient height above the ground. The chosen configuration obviously depends on the shape of the area or shed 1.

Suitable illumination means (not shown) for the shed 1 are also provided.

Separate identification means are provided configured for establishing the identity of each individual animal 2. These separate identification means can be in the form of a tag in which animal identity data are stored, wearable by each animal 2, which tag can be read by at least one tag reader, provided for example in the milking robot 8, at the feeding area 3, at the drinking area 4, or on a vehicle which is moveable in the area 1, e.g. a cleaning vehicle (not shown). For example, Radio Frequency Identification, known as such, with tags/transponders and an antenna with a reader can be used. The tags may also be read by means of the cameras 11 or with an extra camera.

The cameras 11 are connected to a processor or a computer processing unit, and image analysis means (known as such, not shown). With the aid of the cameras 11, the processor and the image analysis means the animals 2 can be tracked temporarily in the shed 1. In an alternative embodiment, the identification means are also formed by the cameras 11, the processor and the image analysis means, so that it is not necessary for the animals 2 to wear tags. In that case, the cameras 11, the processor and the image analysis means form identification means configured for determining the identity of each individual animal 2 and detection and tracking means configured for detecting and tracking the position of each individual animal 2. An extra identification camera may be used in this case at an identification location, for example in the milking robot 8.

The cameras 11 and the computer with image analysis means are configured to repeatedly detect and then temporarily track the position of individual animals 2 until a tracking error occurs. The animals 2 are moving about freely, so that after a certain time the tracking may be interrupted, for example if a cow 2 hides behind another cow 2, or if a cow 2 is only partly visible for the cameras 11, or if two cows 2 remain in close contact with each other for a while. The detection and tracking means assign to the individual animals 2 a track, schematically illustrated in the Figure with reference numeral 13. Here, the term "track" is understood to designate a movement pattern represented by consecutively updates of the animal's position. Of course, in practice the tracks can be much longer than shown in the Figure. A track 13 comprises tracking identity data and tracking position data from a moment of first detection of an animal 2 until a tracking error occurs and the detection and tracking means lose track of the animal 2 in question. At a later moment, a new track 13 will be assigned to the animal 2, as soon as it is detected again.

In order to make sure that all animals 2 can be correctly identified, the system further comprises animal identification means (not shown) with individual animal identity data. Linking means are provided configured for repeatedly linking the tracking identity data of individual animals 2 to the individual animal identity data at a linking moment at a linking location by means of the identification means. The linking means provide a periodical ascertainment of the correct animal identity for the animal tracking means by comparing and matching the stored individual animal identity data with the tracking identity data assigned by the tracking means. In this way, a periodical matching with the correct animal identity as stored in the identification means is achieved.

As already mentioned above, the identification means (not shown) can comprise a tag wearable by each animal and at least one tag reader. This is a very simple and relatively cheap implementation. Additionally or alternatively, the identification means can comprise a (further) camera with image analysis means. The animals 2 can be recognized at a suitable location from their size, body shape, skin pattern, etcetera, in a manner known as such.

The linking location may be situated inside, at or near the milking robot 8, feeding/drinking station 3, 4, selection gate 12 and/or a detection gate (not shown). These are suitable locations for the linking action, because there the animal in question stands still for a while. Preferably, the linking moment is chosen just before or during or after the milking of the animal 2 in the milking robot 8. This is a suitable moment for the automated linking action.

The system is configured for automatically gathering and analyzing animal behaviour data, the system being configured to therefor take into account for each animal only animal behaviour data which are gathered in a defined time interval comprising a linking moment for that animal. Thus, only animal behaviour data are used for which there is a high probability that the animal tracking identity effectively corresponds to the animal identity as stored in the identification means. This improves the accuracy of the system, so that a user-friendly, animal-friendly, safe and reliable animal husbandry system is realized. The reliability of the data gathering is improved by ensuring that only data are taken into account for which the animal's identity is practically beyond doubt.

The defined time interval can be a predetermined, fixed time interval, for example from 30 minutes before the linking moment until 30 minutes after the linking moment.

In a more sophisticated system, the defined time interval can be made dependent on the animal's race and/or age and/or parity and/or oestrus and/or historical behaviour. Based on trial and error, or on historical measured data, the time interval can readily be optimised with respect to the animal's race, age, parity and/or oestrus. For example, older animals 2 tend to be less mobile and move slower than younger ones or animals in heat, so that less often track errors occur and the interval can be made longer. Also, based on historical behaviour of the animal 2, the time interval can be optimised. For example, if it is known from previous measurements that an animal 2 tends to have a lot of track errors, because it moves around frequently and fast, the interval can be made shorter.

In another embodiment, the defined time interval can be made dependent on the time of day and/or on the season and/or on the weather. In this way, a further optimization is achieved. For example, during the day, or on a cool day in spring, or during a thunderstorm, there will be more movements and accordingly more track errors, so that the time interval should be kept shorter. During the night or on a hot summer day there will be less movements and accordingly less track errors, so that longer time intervals can be used. Appropriate intervals in different occurring cases can be readily found and implemented.

According to a highly advantageous embodiment, the defined time interval substantially starts at the last moment of first detection of the animal 2 in question by the detection and tracking means before the linking moment and ends at the first tracking error for the animal in question after the linking moment, so that the defined time interval substantially corresponds to one complete track 13 of the animal 2 in question. The linking action has validated the correctness of the track 13 with its data. In this way, optimal use is being made of the probably reliable track data. This has proven to give excellent results in practice.

It is noted that the defined time interval may also (substantially) begin or end with the linking moment.

Of course, it is also possible to take into account only a subset of the data gathered as described. This could be done for computational efficiency reasons. For example, data corresponding to certain locations of the animal 2 in the area 1, like the resting area 5, can be disregarded, as these do not contribute much to the analysis of the animal behaviour. The system is thus even more efficient. It is also possible to use only a part of the time interval corresponding to the track 13, even a part not containing the linking moment. To be sure that the data are reliable, the defined time interval in which the data are gathered has to contain a linking moment, but it is not necessary to use all the data thus gathered.

It is further possible to attribute a quality value to a track 13, based upon its expected reliability in view of e.g. duration of the track 13, location of the animal 2 in the area 1, historical data relating to the movements of the animal 2 in question, etcetera. In that case, the system can be further enhanced by only taking into account tracks 13 with a sufficiently high quality value.

As the detection and tracking means comprise cameras, a processor or a computer processing unit, and image analysis means, a very animal-friendly implementation is realized, because the animals are not disturbed in any way. As it is automated, it is also a very user-friendly implementation.

In an alternative embodiment, the detection and tracking means comprise tags wearable by the animals 2 configured for repeatedly transmitting messages containing identity information of the animal 2 in question to a number of base stations (not shown), which are configured for determining the animal's position therefrom. Preferably, the messages are radio messages transmitted using ultra-wideband (UWB). This embodiment also gives good results, although it is susceptible to interference problems.

The animal behaviour data comprise animal position data. Such data are highly useful for many analysis purposes. Advantageously, the animal behaviour data are used for heat detection. Thus, animals 2 in heat can be reliably identified and properly dealt with. For example, they can be separated for artificial insemination.

The system further comprises (optionally) a treatment area 9 and a selection gate 12 for guiding an animal 2 to the treatment area 9. This is useful and user-friendly for the farmer, and animal health and welfare is improved.

Thus, a very efficient and reliable, automated, yet animal-friendly system is realized.

## Claims

1. An animal husbandry system, wherein a group of animals (2) can move about freely in an area (1) intended therefor, the system comprising detection and tracking means (11) configured for repeatedly detecting and then temporarily tracking the position of individual animals (2) until a tracking error occurs and in doing so assigning to the individual animals (2) a track (13) comprising tracking identity data and tracking position data from a moment of first detection until the tracking error occurs, wherein the system further comprises animal identification means with individual animal identity data, wherein linking means are provided configured for repeatedly linking the tracking identity data of individual animals (2) to the individual animal identity data at a linking moment at a linking location by means of the identification means, the system being configured for automatically gathering and analyzing animal behaviour data, wherein the system is configured to therefor take into account for each animal (2) only animal behaviour data which are gathered in a defined time interval comprising a linking moment for that animal (2).

2. System according to claim 1, wherein the defined time interval is a predetermined, fixed time interval.

3. System according to any one of claims 1 - 2, wherein the defined time interval is dependent on the animal's race and/or age and/or parity and/or oestrus and/or historical behaviour.

4. System according to any one of claims 1 - 3, wherein the defined time interval is dependent on the time of day and/or on the season and/or on the weather.

5. System according to claim 1, wherein the defined time interval substantially starts at the last moment of first detection of the animal (2) in question by the detection and tracking means (11) before the linking moment and ends at the first tracking error for the animal (2) in question after the linking moment, so that the defined time interval substantially corresponds to one complete track (13) of the animal (2) in question.

6. System according to claim 5, wherein only a subset of the animal behaviour data gathered in the defined time interval substantially corresponding to the complete track (13) are taken into account.

7. System according to any one of claims 1 - 6, wherein the detection and tracking means (11) comprise at least one camera (11), a processor or a computer processing unit, and image analysis means.

8. System according to any one of claims 1 - 6, wherein the detection and tracking means (11) comprise tags wearable by the animals (2) configured for repeatedly transmitting messages containing identity information of the animal (2) in question to a number of base stations, which are configured for determining the animal's position therefrom.

9. System according to claim 8, wherein the messages are radio messages transmitted using ultra-wideband (UWB).

10. System according to any one of claims 1 - 9, wherein the identification means comprise a tag wearable by each animal (2) and at least one tag reader.

11. System according to any one of claims 1 - 10, wherein the identification means comprise a camera with image analysis means.

12. System according to any one of claims 1 - 11, wherein the animal behaviour data comprise animal position data.

13. System according to any one of claims 1 - 12, wherein the animal behaviour data are used for heat detection.

14. System according to any one of claims 1 - 13, wherein the linking location is situated inside, at or near a milking robot (8), a feeding/drinking station (3, 4), a selection gate (12) and/or a detection gate.

15. System according to any one of claims 1 - 14, wherein the linking moment is chosen just before or during or after the milking of the animal (2) in a milking robot (8).
